# FASCICULE DE BREVET EUROPEEN

(11) **EP 0 851 904 B1**
(45) Date de publication et mention de la délivrance du brevet: **18.04.2001**
(21) Numéro de dépôt: 96932630.5
(22) Date de dépôt: 20.09.1996
(51) Int. Cl.: C09J 5/02, C08K 5/10, B32B 27/08

(54) **PROCEDE D'ACCROCHAGE D'UNE SURFACE EN POLYURETHANNE SUR UNE SURFACE EN POLYCHLORURE DE VINYLE**
VERFAHREN ZUM VERBINDEN EINER OBERFLÄCHE AUS POLYURETHAN MIT EINER OBERFLÄCHE AUS POLYVINYLCHLORID
METHOD FOR ATTACHING A POLYURETHANE SURFACE TO A POLYVINYL CHLORIDE SURFACE

(30) Priorité: 20.09.1995 FR 9511055
(43) Date de publication de la demande: 08.07.1998
(73) Titulaire: GEMPLUS, 13881 Gémenos Cédex (FR)
(72) Inventeur: LERICHE, Christian, Gustave, Alain, F-13530 Trets (FR); TURIN, Joel, Alain, Jérôme, F-13008 Marseille (FR)
(86) Numéro de dépôt international: FR9601476
(87) Numéro de publication internationale: WO9711137

(56) Documents cités:
- EP-A- 0 548 933
- FR-A- 2 513 568
- GB-A- 1 601 033

## Description

L'invention se rapporte à un procédé d'accrochage d'une surface en polyuréthanne bicomposant sur une surface en polychlorure de vinyle. Ce procédé s'applique au domaine du collage de deux polymères, plus particulièrement au collage du polyuréthanne (PU) sur du polychlorure de vinyle (PVC), notamment pour la fabrication de cartes à puces avec et/ou sans contacts affleurants.

Les procédés actuels de collage de polyuréthanne (PU) sur une surface en polychlorure de vinyle (PVC) nécessitent une étape préliminaire de traitement de surface. Cette étape permet de modifier l'état de la surface du PVC, c'est-à-dire de modifier les tensions de surface, de manière à obtenir un accrochage satisfaisant entre les deux polymères.

Un tel traitement de surface est réalisé soit au moyen d'un dégraissant, tel que la méthyl éthyl cétone (M.E.K.) ou l'acétone par exemple, soit par flamage, soit par traitement plasma ou enfin par traitement corona. Tous ces différents traitements permettent la création de radicaux libres à la surface du PVC. Ces radicaux libres sont réactifs vis-à-vis d'espèces polymérisables par voie radicalaire, donc principalement vis-à-vis de composés porteurs de doubles liaisons. Cependant, ils ne sont pas réactifs vis-à-vis des composés polymérisables par polycondensation. Or, les polyuréthannes sont obtenus par polycondensation. En conséquence, un accrochage entre une surface PVC et une surface PU réalisé après avoir procédé à un pré-traitement, en vue de créer des radicaux libres à la surface du PVC, présente une mauvaise qualité et est très difficilement reproductible.

De plus, de tels traitements de surface posent de nombreux problèmes de sécurité, de mise en oeuvre, et de coût. En effet, les produits utilisés sont souvent toxiques et la mise en oeuvre de cette étape préliminaire est longue et fastidieuse. En outre, cette étape lourde entraîne un coût de fabrication élevé.

Le document EP-A-548933 se rapporte à un mélange de polymères en particulier PVC-PVA avec PU et un ester phosphorique, comme matériau de base pour cartes magnétiques.

La présente invention permet ce remédier à tous ces inconvénients puisqu'elle propose un procédé d'accrochage d'une surface en polyuréthanne bicomposant sur une surface en polychlorure de vinyle, consistant à placer, sur une surface en PVC, une résine comportant les deux composants nécessaires à la formation du polyuréthanne, et à opérer un pressage, sans traitement de surface préalable. Pour cela, une caractéristique du procédé selon l'invention consiste à incorporer, lors du pressage, un plastifiant dans le polyuréthanne en formation.

Selon une autre caractéristique de l'invention, le plastifiant est choisi parmi les plastifiants compatibles à la fois avec le polychlorure de vinyle (PVC) et avec le polyuréthanne (PU).

Selon une autre caractéristique de l'invention, le plastifiant est incorporé, dans le polyuréthanne en formation, dans des proportions comprises entre 2 et 12% en poids, de préférence entre 3% et 8% en poids.

Le procédé selon la présente invention permet de supprimer tous les inconvénients liés à l'étape préliminaire de traitement de surface. De ce fait, la sécurité des manipulateurs est assurée, puisqu'il n'y a plus de nécessité d'utiliser un produit dangereux. De plus, le temps de réalisation ainsi que le coût de mise en oeuvre sont considérablement amoindris. Enfin, l'accrochage entre le PVC et le PU est de meilleure qualité que celui obtenu par les techniques antérieures et présente une bonne reproductibilité. Le procédé selon l'invention facilite donc la mise en oeuvre industrielle du collage du PU sur du PVC.

Les plastifiants sont généralement utilisés pour augmenter la flexibilité d'un polymère. Cependant, ils n'ont jamais été utilisés, jusqu'à présent, dans des formulations adhésives pour améliorer l'adhésion entre deux polymères. En effet, les plastifiants de type phtalates par exemple, dont les groupes alkyles possèdent généralement un nombre de carbones compris entre 4 et 11, c'est-à-dire les plastifiants de type di-butyl phtalate, di-octylphtalate ou encore le diisoundecanoic phtalate, sont utilisés pour modifier les propriétés physiques du polyuréthanne, c'est-à-dire pour modifier sa flexibilité, son aspect physique et sa stabilité à l'environnement. Les plastifiants comportant deux groupes alkyles à longues chaînes, c'est-à-dire de sept à onze carbones sont préférés car ils migrent moins dans le PU et sont par conséquent moins volatiles que les plastifiants comportant des groupes alkyles à chaînes courtes.

D'autres particularités et avantages apparaîtront à la lecture de la description faite à titre d'exemple illustratif et non limitatif.

Un mode de réalisation du procédé selon la présente invention consiste, lors du pressage des surfaces de PVC et de PU, à incorporer un plastifiant dans l'un de ces polymères. Les raisons de cette incorporation et la manière dont elle est réalisée sont expliquées ci-après.

La compatibilité entre le polychlorure de vinyle et un polyuréthanne quelconque est généralement très faible. Ceci est dû au fait que, contrairement au polyol initial de composition du PU qui est légèrement compatible avec le PVC, l'isocyanate, c'est-à-dire l'agent durcisseur du PU, est totalement incompatible avec le PVC. De plus, comme il a été expliqué précédemment, des réactions radicalaires entre la surface du PVC et le PU, qui est un matériau polymérisable par polycondensation, ne sont pas envisageables. Pour toutes ces raisons, un bon accrochage entre le PVC et le PU est très difficile à obtenir.

Il a donc fallu trouver un moyen permettant notamment d'augmenter la compatibilité entre les deux polymères, c'est-à-dire entre le PVC et le PU, afin d'améliorer la qualité et la reproductibilité de leur accrochage.

De manière surprenante, il a été constaté qu'un plastifiant, qui est à la fois compatible avec le PVC et avec le PU, peut permettre d'obtenir le résultat recherché.

En effet, le plastifiant étant compatible avec les deux polymères, il pénètre dans leur structure et entraîne avec lui des molécules de chacun des deux polymères. De cette manière, les deux polymères, PVC et PU, s'interpénètrent et des liaisons intermoléculaires de types Hydrogène et Van der Walls se créent.

Ainsi, le plastifiant utilisé joue le rôle d'un solvant puisque, du fait de sa viscosité et de sa structure, il augmente la compatibilité entre le PVC et le PU au moment de la mise en contact des deux surfaces polymères.

De plus, le plastifiant présente un avantage par rapport aux solvants généralement utilisés dans les procédés connus de l'art antérieur, tels que la méthyl éthyl cétone par exemple. En effet, il permet de rendre compatibles entre-eux deux polymères sans modifier leurs propriétés physiques, alors que les solvants traditionnels détruisent l'état de surface d'au moins un polymère par solubilisation.

De manière avantageuse, le plastifiant utilisé appartient à la famille des phtalates. Le nombre de carbones des groupes alkyles du phtalate considéré n'a pas d'influence notable sur l'interpénétration des polymères et donc sur la qualité de l'accrochage. Par conséquent, le plastifiant utilisé est avantageusement choisi parmi les phtalates dont les groupes alkyles comportent 4 à 11 carbones, par exemple le Di-n octyl phtalate (D.I.O.P.).

Selon une variante de réalisation, il est également possible de choisir le plastifiant parmi les polyesters aliphatiques.

Le procédé d'accrochage selon l'invention consiste donc dans un premier temps à placer successivement, sur une surface en PVC, d'une part une fine couche de plastifiant, tel que le Di-n octyl phtalate par exemple, et d'autre part une résine comportant les deux composants nécessaires à la formation du réseau polyuréthanne par polycondensation, c'est-à-dire une résine comportant un polyol et un diisocyanate. Dans un deuxième temps, la résine, le plastifiant et le PVC sont pressés pendant quelques minutes. Le plastifiant agit alors à l'interface entre les deux surfaces polymère, au moment de la création du réseau polyuréthanne. En effet, lors de la création du PU, le plastifiant est incorporé dans ce-dernier et il migre simultanément dans la structure PVC, si bien qu'il entraîne des molécules de chacun des deux polymères de manière à ce qu'ils s'interpénètrent.

De manière avantageuse, le plastifiant est incorporé, dans le polyuréthanne en formation, dans des proportions comprises entre 2 et 12% en poids, de préférence entre 3% et 8% en poids. En effet, lorsque le plastifiant est incorporé en trop faibles quantités, c'est-à-dire dans des quantités inférieures à 2% en poids, l'effet du plastifiant est peu visible et pas assez significatif pour que l'accrochage puisse présenter une bonne qualité. En revanche, lorsque la quantité de plastifiant est trop élevée, c'est-à-dire supérieure à 12% en poids, les interactions entre les réactifs sont plus difficiles à créer alors que, toutes les conditions étant égales par ailleurs, la cinétique demeure identique. De plus, l'excédent de plastifiant est rejeté vers l'extérieur de l'interface située entre les deux surfaces de polymère, si bien qu'il nuit à la qualité de l'accrochage entre le PVC et le PU et, par conséquent, à la qualité du produit obtenu par le procédé d'accrochage selon l'invention.

Le procédé selon l'invention permet donc de supprimer l'étape préliminaire de traitement de surface et par conséquent l'utilisation de produits dangereux. Le temps et le coût de réalisation du procédé sont de plus considérablement amoindris.

Le procédé selon l'invention peut bien sûr être élargi au collage de tout type de polymères. Pour cela, il suffit de choisir un plastifiant spécifique qui soit compatible avec les deux polymères à coller, afin d'augmenter leur compatibilité. Ainsi par exemple, le PVC peut être remplacé par tout autre polymère, apte à créer des liaisons Hydrogène avec le PU, tel que l'ABS (Acrylonitril-Butadiène-Styrène) ou le PC (polycarbonate).

En résumé, nous comprenons que le procédé de l'invention aboutit à une compatibilisation de plusieurs éléments, en particulier: les constituants du polyuréthanne, le substrat polymère, le plastifiant tel le D.I.O.P, mais également l'humidité de surface du substrat. Cette compatibilisation permet de créer une zone de réseau semi-interpénétré à l'interface, et de supprimer l'eau présente sur la surface du substrat en la transformant en un élément compatible avec les autres éléments de l'interface, alors qu'elle serait insoluble dans le substrat.

L'importance de l'utilisation du plastifiant en surface, de préférence à l'état pur, tel le D.I.O.P plutôt que dans le substrat ou dans un adhésif, réside notamment dans le fait de la solubilisation de l'eau dans le D.I.O.P, l'eau étant présente en une quantité conforme à une couche moléculaire et le D.I.O.P en une quantité plus importante.

Dans le cas d'une introduction du D.I.O.P dans l'adhésif et/ou le substrat, on constaterait une légère amélioration de l'aptitude au collage, mais, il faudrait en introduire de grosse quantité, ce qui nuirait aux propriétés de l'un ou de l'autre. De meilleurs résultats sont obtenus dans le cadre du procédé de l'invention décrit ci-dessus.

L'invention vise bien entendu à protéger toute structure, en particulier une structure de carte à puce, comportant un réseau en polyuréthanne, par exemple en couche, adhérant à au moins une surface d'un polymère telle que la surface d'une feuille, ledit réseau et ladite l'adhésion étant obtenues selon le procédé décrit supra.

## Revendications

1. Procédé d'accrochage d'une surface d'une résine polyuréthanne bicomposant -(PU) sur une surface d'un polymère caractérisé en ce qu'il consiste à placer une fine couche d'un plastifiant entre la surface du polymère et la surface de la résine et à opérer un pressage de manière à incorporer du plastifiant dans le polyuréthanne en formation.

2. Procédé selon la revendication 1, caractérisé en ce que le plastifiant est compatible à la fois avec le polymère et la résine polyuréthanne.

3. Procédé selon l'une des revendications 1 à 2, caractérisé en ce que le polymère est en polychlorure de vinyle (PVC), en acrylonitril-butadiène-styrène (ABS) ou en polycarbonate (PC).

4. Procédé selon l'une des revendications 1 à 3, caractérisé en ce que le plastifiant appartient à la famille des phtalates.

5. Procédé selon la revendication 4, caractérisé en ce que le plastifiant est choisi parmi les phalates dont les groupes alkyles comportent quatre à onze carbones.

6. Procédé selon l'une des revendications 4 à 5, caractérisé en ce que le plastifiant est le di-n octyl phtalate.

7. Procédé selon la revendication 1 à 3, caractérisé en ce que le plastifiant est choisi parmi les polyesters aliphatiques.

8. Procédé selon l'une des revendications précédentes, caractérisé en ce que le plastifiant est incorporé, dans le polyuréthanne, dans des proportions comprises entre 2% et 12% en poids, de préférence entre 3% et 8% en poids.

9. Structure de carte comportant un réseau en polyuréthanne adhérant à au moins une feuille en polymère, caractérisée en ce que ledit réseau et l'adhésion sont obtenus selon le procédé conforme à l'une des revendications précédentes.

## Patentansprüche

1. Verfahren zum Anhaften einer Oberfläche aus einem Zwei-Komponenten-Polyurethan (PUR) auf einer Oberfläche aus einem Polymer, dadurch gekennzeichnet, dass es darin besteht, eine dünne Schicht eines Weichmachers zwischen der Polymer-Oberfläche und der Kunstharz-Oberfläche anzubringen und einen Druck auszuüben, auf eine Weise, dass der Weichmacher in das sich formende Polyurethan inkorporiert wird.

2. Verfahren nach Anspruch 1, dadurch gekennzeichnet, dass der Weichmacher zugleich mit dem Polymer und dem Polyurethanharz kompatibel ist.

3. Verfahren nach einem der Ansprüche 1 bis 2, dadurch gekennzeichnet, dass das Polymer aus Polyvinylchlorid (PVC), aus Acrylnitril-Butadien-Styrol (ABS) oder aus Polycarbonat (PC) besteht.

4. Verfahren nach einem der Ansprüche 1 bis 3, dadurch gekennzeichnet, dass der Weichmacher zur Familie der Phtalate gehört.

5. Verfahren nach Anspruch 4, dadurch gekennzeichnet, dass der Weichmacher unter den Phtalaten ausgewählt wird, deren Alkylgruppen vier bis elf Kohlenstoffe enthalten.

6. Verfahren nach einem der Ansprüche 4 bis 5, dadurch gekennzeichnet, dass der Weichmacher das Di-n-Octyl-Phtalat ist.

7. Verfahren nach dem Anspruch 1 bis 3, dadurch gekennzeichnet, dass der Weichmacher unter den aliphatischen Polyestern ausgewählt wird.

8. Verfahren nach einem der vorstehenden Ansprüche, dadurch gekennzeichnet, dass der Weichmacher in Gewichtsverhältnissen zwischen 2% und 12% in das Polyurethan inkorporiert wird, vorzugsweise zwischen 3% und 8% des Gewichts.

9. Kartenstruktur mit einem mindestens an einer Polymerfolie anhaftenden Polyurethan-Netz, dadurch gekennzeichnet, dass dieses Netz und das Anhaften dem einem der vorstehenden Ansprüche entsprechenden Verfahren gemäß erhalten wird.

## Claims

1. Method for attaching a bicomponent polyurethane resin surface (PU) to a polymer surface, characterized in that it consists of placing a thin layer of a plasticizer between the surface of the polymer and the surface of the resin and applying pressure so as to incorporate the plasticizer in the polyurethane as it forms.

2. Method according to Claim 1, characterized in that the plasticizer is compatible with both the polymer and the polyurethane resin.

3. Method according to one of Claims 1 to 2, characterized in that the polymer is a polyvinyl chloride (PVC), an acrylonitrile-butadiene-styrene (ABS), or a polycarbonate (PC).

4. Method according to one of Claims 1 to 3, characterized in that the plasticizer belongs to the phthalate family.

5. Method according to Claim 4, characterized in that the plasticizer is chosen from the phthalates whose alkyl groups contain four to eleven carbons.

6. Method according to one of Claims 4 to 5, characterized in that the plasticizer is di-n-octyl phthalate.

7. Method according to Claim 1 to 3, characterized in that the plasticizer is chosen from among the aliphatic polyesters.

8. Method according to one of the foregoing claims, characterized in that the plasticizer is incorporated into the polyurethane in proportions between 2 and 12 wt.%, preferably between 3 and 8 wt.%.

9. Card structure containing a polyurethane network adhering to at least one sheet of polymer, characterized in that said network and the bond are obtained according to the method according to one of the foregoing claims.
